# EUROPEAN PATENT SPECIFICATION

(11) **EP 1 316 186 B1**
(45) Date of publication and mention of the grant of the patent: **02.11.2005**
(21) Application number: 01936396.9
(22) Date of filing: 25.05.2001
(51) Int. Cl.: H04L 29/06, H04L 29/12, H04Q 7/22

(54) **ALLOCATING ADDRESSES TO MOBILE STATIONS**
ADRESSVERGABE AN MOBILE STATIONEN
AFFECTATION D'ADRESSES A DES STATIONS MOBILES

(30) Priority: 29.08.2000 GB 0021202
(43) Date of publication of application: 04.06.2003
(73) Proprietor: MOTOROLA, INC., Schaumburg, IL 60196 (US)
(72) Inventor: SHI, Rong, Swindon, Wiltshire SN25 4WH (GB); FOSTER, Gerry, Swindon, Wiltshire SN25 4GU (GB); GRECO, Nicola, Swindon, Wiltshire SN5 6EH (GB); YANG, Jin, Swindon, Wiltshire SN2 3WH (GB); CHEUNG, Coleen, Yue, Ling, Swindon, Wiltshire SN5 8QU (GB)
(74) Representative: Jepsen, René Pihl
(86) International application number: PCT/EP2001/006001
(87) International publication number: WO 2002/019656

(56) References cited:
- WO-A-00/21254
- WO-A-99/61966

## Description

### Field of the Invention

This invention relates to the allocation of addresses to communication units in order for data to be subsequently routed to such units. The invention is particularly applicable to, but not limited to, addressing of communication units in the internet protocol (IP) domain.

### Background of the Invention

Present day communications systems, both wireless and wire-line, have a requirement to transfer data between communications units. Data, in this context, includes speech communication. Such data transfer needs to be effectively and efficiently provided for, in order to optimise use of limited communication resources.

For data to be transferred across communications networks, a communication unit addressing protocol is required. The communication units are generally allocated addresses that are read by a communication bridge, gateway and/or router, in order to determine how to transfer the data to the addressed unit. The interconnection between networks is generally known as internetworking (or internet).

Networks are often divided into sub-networks, with protocols being set up to define a set of rules that allow the orderly exchange of information. Currently, the two most popular protocols used to transfer data in communications systems are: Transfer Control Protocol (TCP) and Internet Protocol (IP). In all but the simplest of communications systems, these two protocols often work as a complementary pair. The IP portion corresponds to data transfer in the network layer of the well-known OSI model and the TCP portion to data transfer in the transport layer of the OSI model. Their operation is transparent to the physical and data link layers and can thus be used on any of the standard cabling networks such as Ethernet, FDDI or token ring.

The Internet Protocol adds a data header on to the information passed from the transport layer. The resultant data packet is known as an Internet datagram. The header of the datagram contains information such as destination and source IP addresses, the version number of the IP protocol etc. An IP address is assigned to each node on the internet. It is used to identify the location of the network and any sub-networks.

The IP program running on each node knows the location of a gateway on the network, where the gateway links the interconnected networks. Data then passes from node to gateway through the Internet. If the data to be transmitted is particularly large, the Internet Protocol also facilitates fragmentation of the data into smaller units. When a datagram is being routed, or is being reassembled, errors can occur. When such errors occur, the node that detects the error, reports back to the source node.

When transmitted from the source node, each datagram is routed separately through the Internet and the received fragments are finally reassembled at the destination node, prior to forwarding the data to the respective communication unit. The TCP-IP version number helps gateways and nodes interpret the data packet correctly.

Each node using TCP-IP communications requires an IP address that is then matched to its token ring or Ethernet MAC address. The MAC address allows nodes on the same segment to communicate with each other. In order for nodes on a different network to communicate with one another, each node must be configured with an IP address.

Nodes on a TCP-IP network are either hosts or gateways. Any nodes that run application software, or are terminals, are defined as hosts. Any node which is able to route TCP-IP packets between networks is called a TCP/IP gateway node. This node must have the necessary network controller boards to physically interface to other networks.

A typical IP address consists of two fields: the prefix field - a network number identifies the network associated with that particular address, and the suffix field - a host number identifies the particular host within that network. The IP address is 32 bits long and can therefore theoretically address 2³² (over four billion) physical networks. One problem, however, associated with using an IP address containing prefixes and suffixes lies in the decision on how large to make each field. If the prefix is too small, only a few networks will be able to be connected to the internet. However, if the prefix is made larger, then the suffix has to be reduced, which results in a network being able to support only a few hosts.

The present version of the internet protocol addressing scheme (IPv4) can accommodate a few very large networks or many small networks. In reality, a reasonable number of networks of various sizes are required to be supported. However, most organisations tend to have an IP addressing scheme arranged to accommodate a larger network than they generally need, to allow for future network expansion.

As a consequence, the current version of Internet Protocol (IPv4) has scarce addressing space and future versions are currently being developed. It is envisaged that each Public Land Mobile Network (PLMN) will be unable to allocate a unique permanent IP address to each MS using IPv4. Moreover, even in the event that IPv6 were to be deployed in the future, many networks will still consist of legacy networks implementing IPv4.

An IP address can be defined in the form:
'aaa'.'bbb'.'ccc'.'ddd';
where: 'aaa', 'bbb', 'ccc' and 'ddd' are integer values in the range 0 to 255.

On the Internet the 'aaa'.'bbb'.'ccc' part normally define the sub-network and the 'ddd' the host. Such numbering schemes are difficult to remember. Hence, symbolic names (often termed domain names) are frequently used instead of IP addresses to identify individual communication units.

Each individual network on the Internet has a host that runs a process called a domain name server (DNS). The DNS maintains a database called the directory information base (DIB) that contains directory information for that network. When a new host is added, the system manager adds its name and its associated IP address to the DIB. The host is than able to access the Internet.

Normally, the DNS server is reachable by all the hosts on the network via the IP transport protocol. Therefore the DNS protocol for performing address lookup can be carried over IP.

The directory network services on the Internet determine the IP address of the named destination user or application program. This has the advantage that users and application programs can move around the Internet and are not fixed to a particular node and/or IP address.

Due to the recent growth in communications, particularly in internet and wireless communications, there exists a need to provide TCP-IP data transfer techniques in a wireless communications domain.

An established harmonised cellular radio communication system is GSM (Global System for Mobile Communications). An enhancement to this cellular technology can be found in the Global Packet Radio System (GPRS), which provides packet switched technology on a basic cellular platform, such as GSM. A further harmonised wireless communications system currently being defined is the universal mobile telecommunication system (UMTS), which is intended to provide a harmonised standard under which cellular radio communications networks and systems will provide enhanced levels of interfacing and compatibility with other types of communications systems and networks, including fixed communications systems such as the Internet.

Information to be transmitted across the Internet is packetised, with packet switching routes established between a source node and a destination node. Hence, GPRS and UMTS networks have been designed to accommodate packet switched data to facilitate Internet services, such as message service, information service, conversational service and casting service.

Most services are initiated and activated from UMTS terminals. However, some services may be initiated from an Internet node, for example an audio or video conferencing service, home automation notification, job dispatching and information broadcast. These latter types of services are generally referred to as Internet-initiated services.

In order to support these services, GPRS and UMTS terminals are seen and treated as stand-alone Internet hosts uniquely identified by a name or an address. In systems employing a limited number of addresses by which to identify individual communication units, a technique called dynamic addressing is used.

Dynamic addressing requires a pool of addresses to be maintained by an address allocation server, for example a Dynamic Host Configuration Protocol (DHCP) server. Whenever a host is connected to a network, a signalling process is performed between the host and DHCP server to assign an available IP address to the host. In order to do so, the host needs to send the DHCP server its unique ID. When the signalling process is de-activated, the IP address will be returned to the addressing pool and will wait to be assigned to other terminals.

If a mobile station (MS) initiates an Internet connection, the DHCP server recognises the need to identify the MS and typically informs a domain name server (DNS) that a new Internet Protocol address assignment has occurred. Subsequently, the local DNS can then map the mobile station's domain name to an Internet Protocol address allocated by the DHCP, and pass the address information to an Internet Host.

Due to the static nature of typical devices using IP, such as networked PCs and servers, DHCP has been widely used in the Intranet environment to allocate IP addresses dynamically to any hosts that are connected to a network.

However, it is clear that such an arrangement is unacceptable in a wireless domain when the communicating unit requiring an IP address, is not physically connected to the Internet. With such wireless technology, the mobile station needs to have previously established a logical connection with the Internet, in order to have been allocated an IP address and access Internet services, information and applications. This logical connection is generally referred to as a packet data protocol (PDP) context.

Furthermore, as the wireless communications units will not be permanently connected to the Internet, there will be many occasions when the MS will be in a mode where no PDP context with the Internet has been established. In such cases, the Internet Host cannot transfer data to a particular domain name of the mobile station until a corresponding IP address is allocated. Such a problematic scenario always occurs for Internet-initiated services when the MS has not previously accessed the network and been allocated (and maintained) an IP address from the DHCP.

In the 3^{rd} Generation cellular Packet data Protocol (3GPP) "Technical Specification 23.060 v3.3.0 for UMTS; GPRS Service description; stage 2, April 2000", currently being developed by the European Telecommunications Standards Institute (ETSI), it is specified that a gateway can request the activation of a PDP context for a mobile station, upon the gateway receiving a packet from a mobile station that does not have a PDP Context established.

However, in the Technical Specification, there is no recognition of a desire to obtain, or for that matter an indication on how to obtain, an IP address for a MS in order to deliver the first packet of data in a case when the Internet Host initiates the service, particularly when the MS is identified by a domain name.

In summary, a problematic situation occurs when a wireless communications unit has not been allocated an IP address, and the Internet Host initiates a communication. Without having an IP address allocated to the MS, a local DNS server has no means of relating the MS's address (Domain Name or other), as identified by the Internet Host, to a MS's IP address.

In particular, the Internet Host needs to obtain the MS's IP address from the hierarchical DNS before any IP packet is sent to the MS, if it is identified by its corresponding domain name. As a result, a need exists to provide a communications system, and method of addressing communication units, wherein the abovementioned disadvantage(s) may be alleviated.

An example of a communication system comprising a packet data network and a mobile communications network is disclosed in Patent Cooperation Treaty (PCT) patent application publication WO 00/21254. In the system disclosed in WO 00/21254, when the mobile communication network receives a message from the packet data network intended of the mobile subscriber, an available mobile communications network packet address is dynamically assigned from a pool of packet addresses to the mobile subscriber. Thereafter, packets are routed to the mobile subscriber using that dynamically-allocated address.

### Summary of the Invention

In accordance with a first aspect of the preferred embodiment of the present invention, a method of allocating an address to a mobile station operating in a wireless communication system is provided in accordance with claim 1.

In a second aspect of the preferred embodiment of the present invention, a communications system in accordance with claim 9 is provided.

### Brief Description of the Drawings

Exemplary embodiments of the present invention will now be described, with reference to the accompanying drawings, in which:
FIG. 1 shows a prior art Internet-initiated service IP addressing arrangement;
FIG. 2 shows a block diagram of a respective GPRS or UMTS network operator's domain network adapted to support the inventive concepts of the preferred embodiments of the present invention; and
FIG. 3 shows a message sequence chart for performing Domain Name to IP address mapping in accordance with the inventive concepts of the preferred embodiments of the present invention.

### Description of Preferred Embodiments

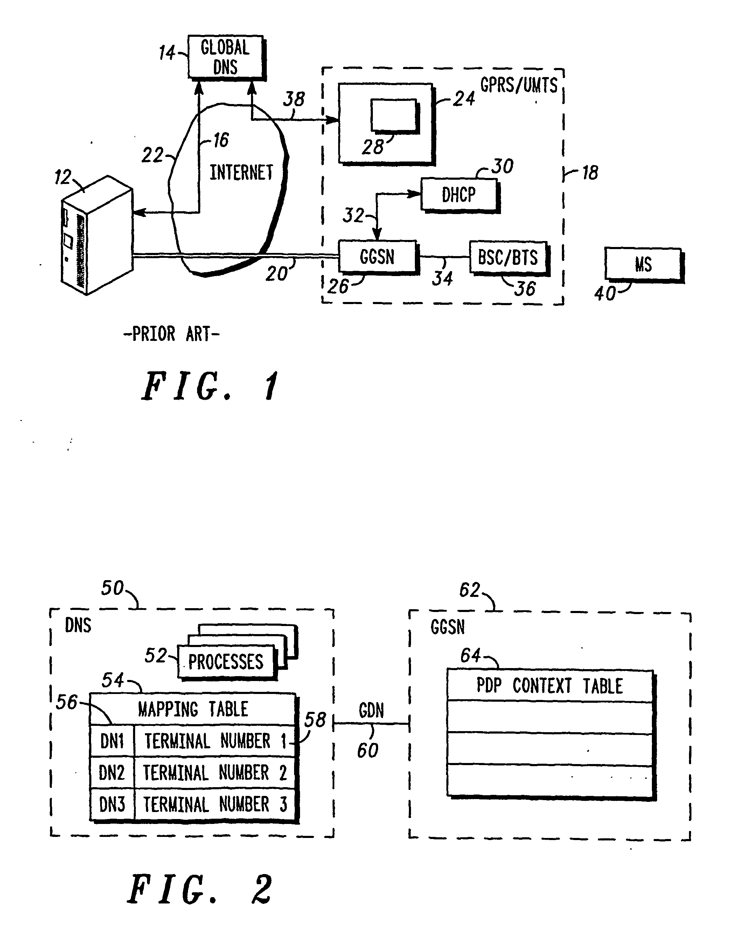

As previously discussed, domain names are often used to identify communicating units, e.g. MSs in UMTS or GPRS networks. FIG. 1 shows a prior art Internet-initiated service arrangement 10 for enabling a Gateway GPRS Serving Node (GGSN) 26 to request a mobile station IP address based on a known domain name.

The Internet-initiated service arrangement 10 includes an Internet Host 12 connected via connection 20 to a Network Operator's Network Domain 18. The Network Operator's Network Domain 18 includes:
(i) a core network, namely a GGSN 26; and
(ii) an access network 36, namely a GPRS (or UMTS) Base Site Controller (BSC) and/or Base Transceiver Station (BTS).

The GGSN 26 is responsible for GPRS (or UMTS) interfacing with a Public Switched Data Network (PSDN) such as the Internet 22. The GGSN also performs a routing and tunnelling function for traffic within the GPRS core network.

The Network Operator's Network Domain 18 also contains a local DNS 24 having a mapping table that maps domain name addresses to IP addresses for communications units operating on the Network Operator's Network Domain 18. For the scenario of a wireless communications system connected to a wire-line communication system, the local DNS 24 would map the MS's domain name addresses to their respective IP addresses. In addition, the Network Operator's Network Domain 18 contains a DHCP 30 coupled to GGSN 26 via connection 32 to facilitate dynamic allocation of IP addresses.

Furthermore, the Internet Host 12 is connected to a global DNS server 14 via connection 16. The global DNS server 14 is connected to local DNS server 24 in the Network Operator's Network Domain 18 via connection 38. The connections 16, 20 and 38 are connections made over the Internet 22.

When Domain Name (DN) addressing is used to identify a MS 40 in an Internet-initiated service situation, the Internet Host 12 (service initiator) needs to perform a DNS lookup to obtain the IP address of the MS 40. The DNS query is performed by DNS servers. Therefore the Internet Host 12 requests an IP address that corresponds to the MS's domain name from global DNS 14, which consequently polls local DNS 24. Local DNS 24 then provides the corresponding IP address from its mapping table 28 to the Internet Host 12 via global DNS 14.

Such an approach, namely obtaining an IP address that corresponds to a domain name in a wireless communication system, is not possible when IP addresses are allocated dynamically. This is a function of the MS 40 being connected to the network but not having been allocated an IP address due to there being no earlier data transfer. Hence, the DIB will only have details of a Domain Name, without a corresponding IP address.

In the preferred embodiment of the present invention described below, the subscriber's Subscriber Identity number (ISDN-number or IMSI - generally referred to in the following text as "Terminal Number"), is used instead of the IP address portion in the DIB, to uniquely identify the terminal.

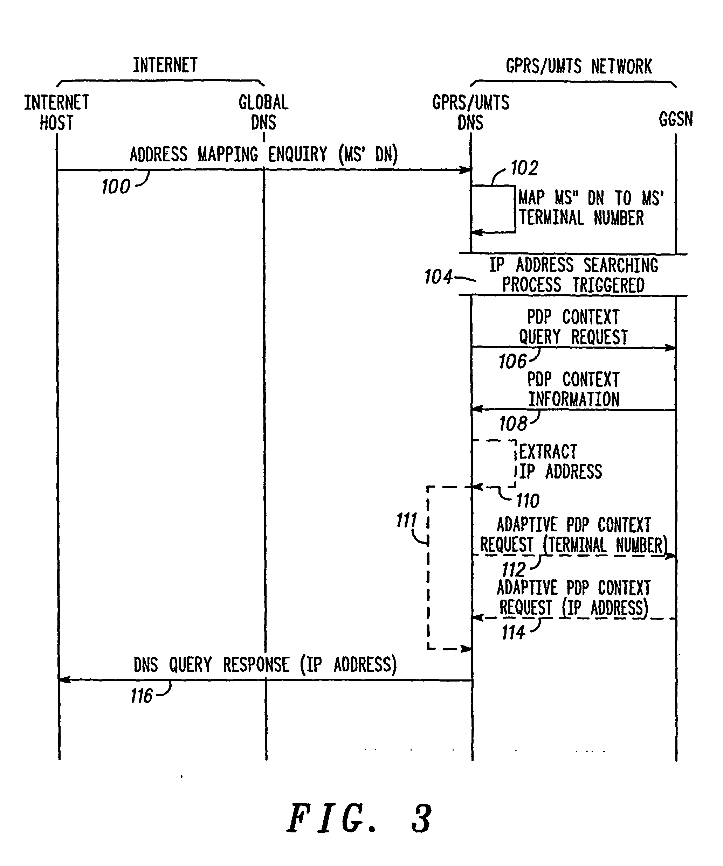

Referring now to FIG. 2, a block diagram of a respective Network Operator's Network Domain 18 is shown, adapted to support the inventive concepts of the preferred embodiments of the present invention. The preferred embodiment of the invention is described with regard to a wireless domain such as GPRS or UMTS technology.

The Network Operator's Network Domain now includes a local DNS 50 coupled to a GGSN 62 via a signalling interface Gdns 62 adapted in accordance with the preferred embodiments of the present invention. The GGSN 62 portion of the core network includes a PDP Context table 64 for storing details of whether respective MSs in the particular wireless system have been allocated an IP address, and therefore established a current IP connection.

The local DNS 50 includes a number of processes for triggering the PDP Context inquiry upon receiving a DNS lookup and a modified mapping table 54. The modified mapping table 54 includes a list of domain names 56 corresponding to individual MS Terminal Numbers 58, for each MS in the particular wireless system.

The signalling interface Gdns 60 carries signalling information between the Network Operator's Network Domain DNS 50 and GGSN 62. Across this interface 60, the Network Operator's Network Domain's DNS 50 sends PDP context queries to GGSN 62 and receives IP address related information from GGSN 62.

Advantageously, in the case where a DNS query has been initiated by the Internet Host 12, and an IP address has not been allocated for the MS corresponding to the requested domain name, the DNS 50 triggers the PDP Context Request of the DHCP 30 via GGSN 62 and the Gdns interface. After the GGSN 62 deals with the request, an allocated IP address to the MS will be returned to local DNS 50 via interface Gdns.

Referring now to FIG. 3, a message sequence chart is shown for performing Domain Name to IP address mapping, in accordance with the inventive concepts of the preferred embodiments of the present invention.

The message sequence chart, in step 100, starts by the Network Operator's Network Domain, and particularly the DNS 50, receiving an address-mapping inquiry corresponding to a supplied Domain Name from the Internet Host 12. The domain name corresponds to a mobile station operating on a GPRS or UMTS wireless communications system.

Based on the supplied Domain Name, the DNS 50 locates the respective "Terminal Number" 58 of the MS having that domain name 56 from the address mapping table 54, as shown in step 102. This request triggers the IP Address Searching process, as in step 104. As part of the IP Address Searching process, the DNS 50 sends a PDP Context Query Request to the GGSN 62 with the respective "Terminal Number" 58, as shown in step 106.

If an IP address has previously been allocated to the MS associated with that domain name, namely a PDP Context has been established for that particular "Terminal Number", then the DNS 50 receives the PDP Context information from the GGSN 62, as shown in step 108. In such a case, the IP address is extracted from the PDP Context, as in step 110, and the DNS 50 responds to the Internet Host 12 with the associated IP address, as shown in step 111 and 116, thereby terminating the process.

If, on making a PDP Context request in step 106, the PDP Context has not been established for the respective "Terminal Number", the DNS 50 activates a PDP Context Request to GGSN, as shown in step 112. The use of the DNS to activate a PDP context request facilitates the Domain Name to dynamic address mapping whereas the use of a GGSN requesting an activation of a PDP Context request only allows an IP address to be allocated upon receipt of an IP packet.

However, it is noteworthy that the PDP Context Request includes the new feature of the "Terminal Number" of the associated MS, to advantageously facilitate easy handling of subsequent DNS query requests.

The GGSN, together with the DHCP 30 allocate an IP address corresponding to the domain name of the MS. The GGSN transmits the IP address to the DNS 50 over the signalling interface Gdns 60, as shown in step 114. The IP address is then extracted from the PDP Context by the DNS 50. The DNS 50 responds to the Internet Host 12 with the associated IP address, as shown in step 116, thereby terminating the process.

Whilst the present invention finds particular application in a wireless communication system, such as the UMTS or GPRS systems being developed by ETSI, for interacting with a fixed data communication, such as the Internet on a PSDN, a skilled person would readily recognise that the present invention could be employed in other wireless/fixed arrangements.

In summary, the present invention is generally related to a method and apparatus for assigning addresses, particularly Internet Protocol addresses, in a communication system that links a wireless system to a fixed system. Preferably, a domain name server of a network operator's network domain receives an address mapping inquiry from the fixed communication system and locates a respective terminal identifier (terminal number) of the mobile station in response to the supplied address mapping inquiry. Preferably the address-mapping inquiry includes a domain name associated with the mobile station.

The domain name server then determines whether an address, preferably an Internet Protocol address, has been allocated for the mobile station. In response to a negative determination the domain name server activates an address allocation request, preferably sent to a gateway. The gateway (in isolation or preferably in conjunction with a DHCP) then allocates an (IP) address corresponding to the respective terminal identifier of the mobile station.

The inventive concepts described herein also detail, inter-alia, a modified address mapping table, preferably for use in a domain name server associated with a GPRS/UMTS domain. Furthermore, a signalling interface is provided between preferably a domain name server and a gateway, for example a GGSN, for (IP) address query transmissions. The address query transmission is preferably a Packet Data Protocol context inquiry. In the case where an (IP) address has not previously been allocated to a mobile station, a means of triggering an (IP) address allocation in the case of Internet-initiated services, is provided.

The present invention finds particular application in wireless communication systems such as the UMTS or GPRS systems. However, the inventive concepts contained herein are equally applicable to alternative fixed and wireless communications systems. Whilst the specific, and preferred, implementations of the present invention are described above, it is clear that variations and modifications of such inventive concepts could be readily applied by one skilled in the art.

One such modification could be made in the allocation of an Internet Protocol address being made by the gateway, a DHCP, another device operably connected to the gateway or any combination thereof.

Thus, a communications system, and method of addressing communication units, has been provided that alleviates some of the abovementioned disadvantages.

## Claims

1. A method of allocating an address to a mobile station (40) operating in a wireless communication system (18) in order to facilitate a communication link to a fixed communication system (22), the method comprising the steps of:
receiving an address mapping inquiry from the fixed communication system(22);
locating a respective terminal identifier of the mobile station (40)in response to the supplied address mapping inquiry;
determining whether an address has been allocated for the mobile station(40);
and the method being **characterized by** comprising the steps:
activating, in response to a negative determination, a packet data protocol context allocation request; and
allocating a packet data protocol context having an address corresponding to the respective terminal identifier of the mobile station(40).

2. A method of allocating an address to a mobile station (40) according to claim 1, wherein the address is an Internet Protocol address.

3. A method of allocating an address to a mobile station (40) according to claim 1, wherein the steps of receiving and locating are performed by a domain name server.

4. A method of allocating an address to a mobile station (40) according to claim 3, wherein the received address mapping inquiry corresponds to a domain name of the mobile station(40).

5. A method of allocating an address to a mobile station (40) according to claim 4, wherein the address is an Internet Protocol Address and the step of allocating an internet protocol address is performed by a gateway or dynamic host configuration protocol, the method further comprising the steps of:
transmitting an internet protocol address packet by said gateway to said domain name server;
extracting said internet protocol address from said internet protocol address packet by said domain name server; and
responding to said fixed communication system with the associated internet protocol address.

6. A method of allocating an address to a mobile station (40) according to claim 1, wherein the inquiry is received from an internet host.

7. A method of allocating an address to a mobile station (40) according to claim 1, wherein the step of determining whether an address has been allocated for the mobile station (40) includes a step of sending an internet protocol address query with a respective terminal identifier.

8. An apparatus for allocating an address to a mobile station (40) operating in a wireless communication system (18) in order to facilitate a communication link to a fixed communication system (22), the apparatus comprising:
means for receiving an address mapping inquiry from the fixed communication system(22);
means for locating a respective terminal identifier of the mobile station (40)in response to the supplied address mapping inquiry;
means for determining whether an address has been allocated for the mobile station(40);
and the apparatus being **characterized by** further comprising:
means for activating, in response to a negative determination, a packet data protocol context allocation request; and
means for allocating a packet data protocol context having an address corresponding to the respective terminal identifier of the mobile station(40).

## Patentansprüche

1. Verfahren zur Vergabe einer Adresse an eine mobile Station (40), die in einem drahtlosen Kommunikationssystem (18) arbeitet, um eine Kommunikationsverbindung mit einem feststehenden Kommunikationssystem (22) zu ermöglichen, wobei das Verfahren die Schritte umfasst:
Empfangen einer Adressabbildungsanfrage vom feststehenden Kommunikationssystem (22);
Lokalisieren eines entsprechenden Endgerätbezeichners der mobilen Station (40) in Erwiderung auf die gestellte Adressabbildungsanfrage;
Ermitteln, ob eine Adresse für die mobile Station (40) vergeben worden ist;
und wobei das Verfahren **gekennzeichnet ist durch** Umfassen der Schritte:
Aktivieren einer Paketdatenprotokollkontext-Vergabeanforderung in Erwiderung auf eine negative Ermittlung; und
Vergeben eines Paketdatenprotokollkontexts mit einer Adresse entsprechend dem entsprechenden Endgerätbezeichner der mobilen Station (40).

2. Verfahren zur Vergabe einer Adresse an eine mobile Station (40) nach Anspruch 1, wobei es sich bei der Adresse um eine Internet-Protocol- Adresse handelt.

3. Verfahren zur Vergabe einer Adresse an eine mobile Station (40) nach Anspruch 1, wobei die Schritte zum Empfangen und Lokalisieren durch einen Domain Name Server ausgeführt werden.

4. Verfahren zur Vergabe einer Adresse an eine mobile Station (40) nach Anspruch 3, wobei die empfangene Adressabbildungsanfrage einem Domain-Namen der mobilen Station (40) entspricht.

5. Verfahren zur Vergabe einer Adresse an eine mobile Station (40) nach Anspruch 4, wobei es sich bei der Adresse um eine Internet-Protocol-Adresse handelt und der Schritt zur Vergabe eine Internetprotokolladresse durch ein Gateway oder dynamisches Hostkonfigurationsprotokoll ausgeführt wird, wobei das Verfahren darüber hinaus die Schritte umfasst:
Übertragen eines Internetprotokolladresspakets durch das Gateway zum Domain Name Server;
Extrahieren der Internetprotokolladresse aus dem Internetprotokolladresspaket durch den Domain Name Server; und
dem feststehenden Kommunikationssystem mit der zugehörigen Internetprotokolladresse zu antworten.

6. Verfahren zur Vergabe einer Adresse an eine mobile Station (40) nach Anspruch 1, wobei die Anfrage von einem Internethost empfangen wird.

7. Verfahren zur Vergabe einer Adresse an eine mobile Station (40) nach Anspruch 1, wobei der Schritt zum Ermitteln, ob eine Adresse für die mobile Station (40) vergeben worden ist, einen Schritt zum Senden einer Internetprotokolladressanfrage mit einem entsprechenden Endgerätbezeichner umfasst.

8. Vorrichtung zur Vergabe einer Adresse an eine mobile Station (40), die in einem drahtlosen Kommunikationssystem (18) arbeitet, um eine Kommunikationsverbindung mit einem feststehenden Kommunikationssystem (22) zu ermöglichen, wobei die Vorrichtung umfasst:
Mittel zum Empfangen einer Adressabbildungsanfrage vom feststehenden Kommunikationssystem (22);
Mittel zum Lokalisieren eines entsprechenden Endgerätbezeichners der mobilen Station (40) in Erwiderung auf die gestellte Adressabbildungsanfrage;
Mittel zum Ermitteln, ob eine Adresse für die mobile Station (40) vergeben worden ist;
und wobei die Vorrichtung **dadurch gekennzeichnet ist, dass** sie darüber hinaus umfasst:
Mittel zum Aktivieren einer Paketdatenprotokollkontext-Vergabeanforderung in Erwiderung auf eine negative Ermittlung; und
Mittel zur Vergeben eines Paketdatenprotokollkontexts mit einer Adresse entsprechend dem entsprechenden Endgerätbezeichner der mobilen Station (40).

## Revendications

1. Procédé 10pour affecter une adresse à un poste mobile (40) fonctionnant dans un système de communication sans fil (18) pour faciliter une liaison de communication avec un système de communication fixe (22), le procédé comprenant les étapes consistant à:
recevoir une demande de mappage d'adresse de la part du système de communication fixe (22);
localiser un identifiant de terminal respectif du poste mobile (40) en réponse à la demande envoyée de mappage d'adresse;
déterminer si une adresse a été affectée au poste mobile (40);
et le procédé étant **caractérisé en ce qu'**il comprend les étapes consistant à:
en réponse à une détermination négative, activer une demande d'affectation de contexte de protocole de données de paquet; et
affecter un contexte de protocole de données de paquet comportant une adresse correspondant à l'identifiant de terminal respectif du poste mobile (40).

2. Procédé pour affecter une adresse à un poste mobile (40) selon la revendication 1, selon lequel l'adresse est une adresse de protocole Internet.

3. Procédé pour affecter une adresse à un poste mobile (40) selon la revendication 1, selon lequel les étapes de réception et de localisation sont exécutées par un serveur de nom de domaine.

4. Procédé pour affecter une adresse à un poste mobile (40) selon la revendication 3, selon lequel la demande de mappage d'adresse reçue correspond à un nom de domaine du poste mobile (40).

5. Procédé pour affecter une adresse à un poste mobile (40) selon la revendication 4, selon lequel l'adresse est une adresse de protocole Internet et l'étape d'affectation d'une adresse de protocole Internet est exécutée au moyen d'un protocole de configuration de passerelle ou d'ordinateur serveur dynamique, le procédé comprenant en outre les étapes consistant à:
émettre un paquet d'adresse de protocole Internet au moyen de ladite passerelle vers ledit serveur de nom de domaine;
extraire ladite adresse de protocole Internet à partir dudit paquet d'adresse de protocole Internet au moyen dudit serveur de nom de domaine; et
répondre audit système de communication fixe avec l'adresse de protocole Internet associé.

6. Procédé pour affecter une adresse à un poste mobile (40) selon la revendication 1, selon lequel la demande est reçue à partir d'un ordinateur serveur Internet.

7. Procédé pour affecter une adresse à un poste mobile (40) selon la revendication 1, selon lequel l'étape de détermination du fait qu'une adresse a été affectée ou non au poste mobile (40) inclut une étape d'émission d'une demande d'adresse de protocole Internet avec un identifiant de terminal respectif.

8. Dispositif pour affecter une adresse à un poste mobile (40) fonctionnant dans un système de communication sans fin (18) pour faciliter une liaison de communication avec un système de communication fixe (22), le dispositif comprenant:
des moyens pour recevoir une demande de mappage d'adresse à partir du système de communication fixe (22);
des moyens pour localiser un identifiant de terminal respectif du poste mobile (40) en réponse à la demande de mappage d'adresse délivrée;
des moyens pour déterminer si une adresse a été affectée au poste mobile (40);
et le dispositif étant **caractérisé en ce qu'**il comprend en outre:
des moyens pour activer, en réponse à une détermination négative, une demande d'affectation de contexte de protocole de données de paquet;
des moyens pour affecter un contexte de protocole de données de paquet possédant une adresse correspondant à l'identifiant de terminal respectif du poste mobile (40).
